# FASCICULE DE BREVET EUROPEEN

(11) **EP 2 501 567 B1**
(45) Date de publication et mention de la délivrance du brevet: **04.03.2015**
(21) Numéro de dépôt: 10805254.9
(22) Date de dépôt: 19.11.2010
(51) Int. Cl.: B60C 23/04

(54) **PROCEDE DE REMPLACEMENT D'UN BOITIER DE DETECTION EN PLACE A L'INTERIEUR DES ROUES D'UN VEHICULE, DISPOSITIF ET CAPTEUR PERMETTANT DE LE METTRE EN OEUVRE**
VERFAHREN ZUR ERSETZUNG EINES SENSORMODULS IN EINEM FAHRZEUGSRAD UND DESSEN VORRICHTUNG
METHOD OF REPLACEMENT OF A SENSOR MODULE IN A VEHICLE WHEEL AND ITS ASSOCIATED DEVICE

(30) Priorité: 20.11.2009 FR 0958220
(43) Date de publication de la demande: 26.09.2012
(73) Titulaire: LDL Technology, 31520 Ramonville Saint Agne (FR)
(72) Inventeur: LEFAURE, Philippe, F-31450 Montbrun Lauragais (FR); MOREAU, Thierry, F-31130 Balma (FR)
(74) Mandataire: Richebourg, Michel François
(86) Numéro de dépôt international: PCT/FR2010/052461
(87) Numéro de publication internationale: WO 2011/061455

(56) Documents cités:
- WO-A1-2009/006518
- US-A1- 2005 132 792

## Description

### DOMAINE D'APPLICATION DE L'INVENTION

La présente invention a trait au domaine de la détection des données disponibles à l'intérieur des roues d'un véhicule et notamment aux adaptations permettant d'assurer le remplacement desdits moyens de détection.

### DESCRIPTION DE L'ART ANTÉRIEUR

Un système de détection tel un système de surveillance de pression est classiquement constitué de capteurs de pression sans fil dotés d'un numéro d'identifiant unique (ID) placés à l'intérieur de chaque roue du véhicule et d'un récepteur capable de recevoir l'information desdits capteurs. La gestion de ces informations et notamment la détermination de l'origine des informations rend particulièrement utile la reconnaissance dudit identifiant unique.

Le lien entre l'identifiant unique et sa localisation est réalisé lors d'une phase d'apprentissage mise en oeuvre chez le constructeur d'automobile lors de la mise en service du véhicule. Cette phase d'apprentissage consiste à faire reconnaître au récepteur et à l'automate/processeur associé que le signal (et donc les données) contenant un certain identifiant correspond aux données issues d'une certaine roue (et donc la localisation des roues).

Aujourd'hui, lorsque le capteur est hors service, le conducteur doit se rendre dans un garage de la marque du véhicule dans lequel le capteur défectueux est remplacé par un nouveau capteur doté d'un nouveau numéro d'identifiant unique. Une nouvelle phase d'apprentissage doit alors être mise en oeuvre pour supprimer les affectations de données liées au numéro d'identifiant unique qui ne sera plus utilisé du fait de la suppression du capteur défectueux d'une part, et pour créer un nouveau lien entre le nouveau numéro et sa localisation d'autre part.

L'art antérieur propose des solutions à ces inconvénients, parmi celles-ci les solutions décrites ci-dessous.

Le document EP 1 562 162 décrit un dispositif de surveillance de pneumatiques comprenant des capteurs équipant chaque pneumatique d'un véhicule et détectant les paramètres du pneumatique. Les capteurs transmettent, par une liaison sans fil, les résultats détectés à un dispositif de surveillance équipé d'un récepteur recevant les résultats détectés envoyés par chaque capteur afin de surveiller les paramètres de chaque pneumatique sur la base des résultats détectés et reçus par ledit récepteur. Afin de solutionner les inconvénients de l'art antérieur, ledit capteur ou ledit dispositif de surveillance comprend :
- une unité de stockage stockant plus de deux types d'information de méthode de transmission pour le transfert de données entre ledit capteur et ledit dispositif de surveillance et,
- des moyens commutateurs pour sélectionner un type d'information de méthode de transmission parmi ceux stockés et pour mettre en place une méthode de transmission sur la base de l'information sur la méthode de transmission disponible.

Ce dispositif autorise un capteur de remplacement conforme à l'invention à venir dialoguer avec un dispositif de surveillance du véhicule qu'elle que soit la marque ou le modèle du véhicule en mettant à la disposition du capteur tous les protocoles de communication à l'intérieur d'une unité de stockage. Il en est de même si le dispositif de surveillance dispose de tous les protocoles afin de dialoguer avec un nouveau capteur.

Le document US2008/0100430 décrit un outil pour un dispositif de surveillance de la pression d'un pneumatique comprenant :
- une unité de stockage configurée pour stocker une pluralité de protocoles de communication utilisés par un dispositif de surveillance de pression de pneumatique pour dialoguer avec une unité de contrôle électronique du véhicule,
- un module requérant de données de véhicule configuré pour requérir des données du véhicule,
- un module de réception de données de véhicules configuré pour recevoir lesdites données,
- un module d'accès configuré pour accéder à l'unité de stockage pour retrouver au moins un protocole de communication,
- un module de détermination configuré pour déterminer quel protocole de communication est stocké pour un véhicule prédéterminé, et
- un module de sélection configuré pour sélectionner le protocole de communication basé sur les données du véhicule.

A partir des protocoles stockés, l'outil peut dialoguer avec le dispositif de surveillance de pression de pneumatique du véhicule ou avec les unités de contrôle électronique (capteur) ainsi qu'assurer sa mise à jour ou la réinstallation du système.

Le document WO2009006518, en accord avec le préambule de la revendication, 1, décrit une méthode pour programmer un dispositif de surveillance de la pression d'un pneumatique comprenant :
- le stockage d'une pluralité de programmes sélectionnables pour mettre en oeuvre un dispositif de surveillance de pression dans une première unité de stockage,
- l'activation d'un des programmes sélectionnables pour mettre en oeuvre le dispositif de surveillance de la pression d'un pneumatique selon le protocole défini correspondant au programme sélectionné. Cette solution impose soit une attribution des identifiants au moyen du système de diagnostic embarqué (OBD) nécessitant un investissement matériel important soit une phase d'auto apprentissage par l'ordinateur de bord du véhicule, phase nécessitant une durée minimale de roulage de véhicule pendant laquelle le système de surveillance de la pression des pneumatiques ne fonctionne pas complètement.

Il existe également le document US 2005132792 qui décrit une méthode pour remplacer un pneumatique sur un véhicule du type de celui équipé d'un système de surveillance de la pression des pneumatiques. Ledit véhicule comprend un premier capteur qui ayant un premier code d'identification est monté sur une première roue. A des fins de remplacement de ce premier capteur lors de sa défaillance, son numéro d'identifiant est copié dans un capteur de remplacement.
Une telle méthode ne tient pas compte de la pluralité de protocoles de communication susceptibles d'être exploitée dans ce domaine et nécessite donc la mise en place d'un stock de types différents de capteurs vierges, chaque type disposant du protocole adapté à la marque, au modèle du véhicule, etc... Une telle méthode présente ainsi des inconvénients de logistique, de coût de stockage, et de gestion de durée de vie des batteries.

Après analyse des documents de l'art antérieur, il apparaît que la polyvalence des différents sous-ensembles est construite autour de l'utilisation d'une unité de stockage qui, équipant les capteurs, le dispositif de surveillance ou l'outil d'interrogation met à disposition de ces sous-ensembles le protocole de communication permettant de dialoguer avec les autres sous-ensembles.

Cette caractéristique permet, lors de la mise en service du système de surveillance ou lors d'un changement de sous-ensemble, de garantir les possibilités de dialogue entre les différents sous-ensembles. Néanmoins, elle ne résout pas l'inconvénient lié à la nécessité d'un apprentissage lors du remplacement d'un capteur défectueux. En effet, même si le capteur ou les autres sous-ensembles gardent la possibilité de dialoguer quel que soit le modèle de véhicule ou système de surveillance, il reste nécessaire d'assurer une phase d'apprentissage.

### DESCRIPTION DE L'INVENTION

Partant de cet état de fait, la demanderesse a mené des recherches visant à rendre plus simple et plus rapide le remplacement desdits capteurs.

Ces recherches ont abouti à la conception et à la réalisation d'un procédé de remplacement d'un capteur défectueux d'un système de surveillance notamment de la pression des roues d'un véhicule du type de celui comprenant:
- des capteurs sans fil disposés dans chaque roue et un récepteur,
- un numéro d'identifiant unique étant affecté à chaque capteur permettant ainsi au récepteur d'identifier le signal,
remarquable en ce qu'il consiste à :
- retirer le capteur défectueux,
- identifier et à relever le numéro d'identifiant unique du capteur défectueux,
- identifier et à relever le protocole de communication utilisé sur le véhicule,
- affecter ledit numéro d'identifiant unique à un nouveau capteur vierge sans protocole de communication ni numéro d'identifiant affectés et simultanément,
- programmer le nouveau capteur afin qu'il exploite ledit protocole de communication.

Cette caractéristique est particulièrement avantageuse en ce qu'elle évite la phase d'apprentissage du système puisque les numéros d'identifiant initiaux sont conservés. Il n'est plus nécessaire de réaliser un diagnostic de l'ensemble du système et, il n'est donc plus nécessaire d'avoir accès aux équipements complexes de programmation et d'apprentissage dont seuls disposent les garages de la marque du véhicule. Ainsi, un tel procédé propose de relever l'identifiant et le protocole affectés au capteur à remplacer sans passer par le système de diagnostic embarqué du véhicule (OBD).

La polyvalence proposée par le procédé de l'invention vient du fait que le capteur est vierge de tout identifiant ou de tout protocole.

Afin de rendre possible la communication une fois l'identifiant relevé ou simultanément à ce relevé, le protocole est également relevé.

Cette identification du protocole peut être réalisée par identification visuelle de la marque et du modèle de véhicule et/ou par le relevé du code d'identification du véhicule (code V.I.N.).

Bien entendu, les équipements permettant d'attribuer un nouveau numéro à un capteur existent puisque cette opération est réalisée systématiquement lors de la fabrication des capteurs classiques. Néanmoins, dans l'invention, un équipement d'attribution d'identifiant est utilisé de manière nouvelle en assurant le transfert simultané de l'identifiant et du protocole (chargement programme) de communication du capteur défectueux à un nouveau capteur. Selon un autre mode de réalisation le transfert de l'information de position est également assuré.

Conformément aux objectifs de l'invention le remplacement d'un capteur défectueux devient beaucoup plus simple et moins onéreux.

Il n'est en effet plus nécessaire de gérer un stock de types différents de capteurs vierges, chaque type disposant du protocole adapté à la marque, au modèle du véhicule, etc... contrairement à la solution proposée par le document US 2005132792. De plus, contrairement à la solution proposée par le document Wo2009006518, il n'est plus nécessaire de passer par l'interface du système de diagnostic embarqué (OBD) ni par une phase d'auto-apprentissage par roulage du véhicule qui constituaient des solutions à la fois longues et onéreuses. En effet, le procédé de l'invention permet une fonctionnalité totale du système de surveillance de la pression des pneumatiques dès le premier tour de roue du véhicule.

Afin de faciliter l'attribution du numéro, le nouveau capteur est un capteur particulièrement original auquel aucun identifiant n'a été attribué lors de sa fabrication. Cet état "vierge" n'existe pas en sortie de fabrication classique et c'est donc un capteur adoptant des caractéristiques nouvelles que nécessite la mise en oeuvre du procédé de l'invention.

Ainsi, le procédé de l'invention consiste à sélectionner des opérations particulières à l'intérieur d'une gamme connue et à les appliquer à une situation nouvelle. La gamme connue est celle de l'installation et de la mise en service du système de surveillance sur le véhicule où des capteurs se voient attribuer en sortie de chaîne de fabrication, un numéro d'identifiant unique. La situation n'est plus la mise en service mais une opération de maintenance et de remplacement requérant de plus la fonctionnalité de lecture et de mise en mémoire du numéro du capteur défectueux.

Ledit nouveau capteur auquel va être attribué le numéro de l'ancien capteur en lieu et place de ce dernier, peut être installé dans le pneumatique avant ou après chargement de l'identifiant et du protocole, du fait de l'utilisation d'outils fonctionnant à distance par ondes basses fréquences tel le dispositif décrit plus bas.

La lecture du numéro d'identifiant unique du capteur défectueux est réalisé par un outil de type boîtier portable électronique exploitant les ondes radio basses fréquences du type de celui utilisé lors des opérations de maintenance.

Afin de faciliter les futures maintenances, le procédé consiste à éditer une étiquette comportant ledit numéro d'identifiant unique. En effet, alors que certains capteurs comportent sur leur corps leur numéro d'identifiant, il ne peut en être de même pour le capteur "vierge" susceptible d'être utilisé dans le procédé de l'invention.

La lecture du numéro d'identifiant unique peut en effet être également réalisée par lecture visuelle directe de l'opérateur sur le capteur défectueux lorsque ce dernier le porte.

L'invention concerne également le dispositif permettant de mettre en oeuvre le procédé tel que décrit plus haut et qui est remarquable en ce qu'il est constitué par un outil de type boîtier portable électronique qui assure la lecture du numéro du capteur défectueux, le met en mémoire et assure son transfert dans la mémoire d'un nouveau capteur. La programmation du capteur peut être réalisée par différents procédés, parmi lesquels : Bluetooth V4.0 ou Zigbee ou transmission par le capteur de pression associé au micro processeur du boîtier contenant le capteur via un delta pression piloté, ou aussi en basse fréquence 125 KHz.

Selon une autre caractéristique, il comporte en mémoire l'ensemble des programmations de protocoles possibles et assure la programmation du capteur selon le protocole de communication identifié sur le véhicule. Ces protocoles peuvent être mis à jour à partir de bases de données et/ou de serveurs informatiques.

Selon une autre caractéristique, le dispositif est connecté par technologie USB à une base de données et/ou un serveur dédié au moyen d'un ordinateur (PC).

Selon une autre caractéristique particulièrement avantageuse, le procédé consiste à mettre en mémoire dans une base de données l'opération de maintenance réalisée pour traçabilité.

Cette connexion à une base de données via un réseau en connexion avec le dispositif ou l'ordinateur associé, est exploitée à des fins de mise en mémoire de l'opération de maintenance à des fins de traçabilité nominative par client ou par véhicule avec un suivi kilométrique depuis la dernière opération de renouvellement/remplacement de capteur. Une telle traçabilité et mise en archive de l'historique des opérations de maintenance permet :
- la mise en place d'un système d'alerte de dates pour rappel au client de la nécessité du renouvellement des capteurs,
- la mise en place d'un suivi lié à la marque du pneumatique utilisé pour en déduire l'usure et apporter des conseils de conduite.

Cette base de données permet également de suivre en temps réel la consommation du marché de rechange et donc de savoir le volume et le modèle de capteurs de rechange installés pour mieux gérer et appréhender la production desdits capteurs.

Après identification visuelle par l'opérateur du modèle de véhicule, le nom du modèle est saisi dans le dispositif, nom correspondant à un protocole de communication sur la base duquel va être configuré le module de communication dudit capteur en même temps qu'il va se voir attribuer un identifiant qui peut lui-même être saisi sur le dispositif après lecture visuelle directe.

De même, la saisie peut être inutile, si par interrogation basse fréquence, le dispositif peut récupérer l'ensemble de ces paramètres. Un autre paramètre peut être constitué par l'information codée de la localisation du capteur. En effet, selon une autre caractéristique particulièrement avantageuse surtout utilisée lorsque le protocole d'origine le commande, le procédé est remarquable en ce qu'une information permettant de localiser la roue dans laquelle est placé le capteur, est affectée dans la mémoire du capteur en même temps que l'identifiant unique. La possession d'un tel dispositif et d'un jeu de capteurs vierges va permettre à tout garagiste de réaliser l'opération de maintenance des capteurs sans nécessiter un dispositif de dialogue avec le système de diagnostic embarqué (OBD).

Une fois le nouveau capteur installé, la programmation et la configuration de ce dernier sont vérifiées par ledit dispositif qui réalise une interrogation à distance et force ledit capteur à émettre.

Selon une autre caractéristique, c'est avant installation que la programmation et la configuration de ce dernier sont vérifiées par ledit dispositif qui réalise une interrogation à distance et force ledit capteur à émettre. Ainsi, le procédé est remarquable en ce qu'il consiste à interroger le nouveau capteur après programmation, lequel capteur répond pour validation de son état. Cette interrogation se fait alors sur la base de données extérieures.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, deux modes de réalisation d'un dispositif et d'un capteur conformes à l'invention.

### BRÈVE DESCRIPTION DES DESSINS

La figure 1 est un schéma illustrant un premier mode de réalisation d'un dispositif de mise en oeuvre d'un procédé conforme à l'invention,
La figure 2 est un schéma illustrant un deuxième mode de réalisation d'un dispositif de mise en oeuvre d'un procédé conforme à l'invention,
La figure 3 est un schéma illustrant un troisième mode de réalisation d'un dispositif de mise en oeuvre d'un procédé conforme à l'invention

### DESCRIPTION DES MODES DE RÉALISATION

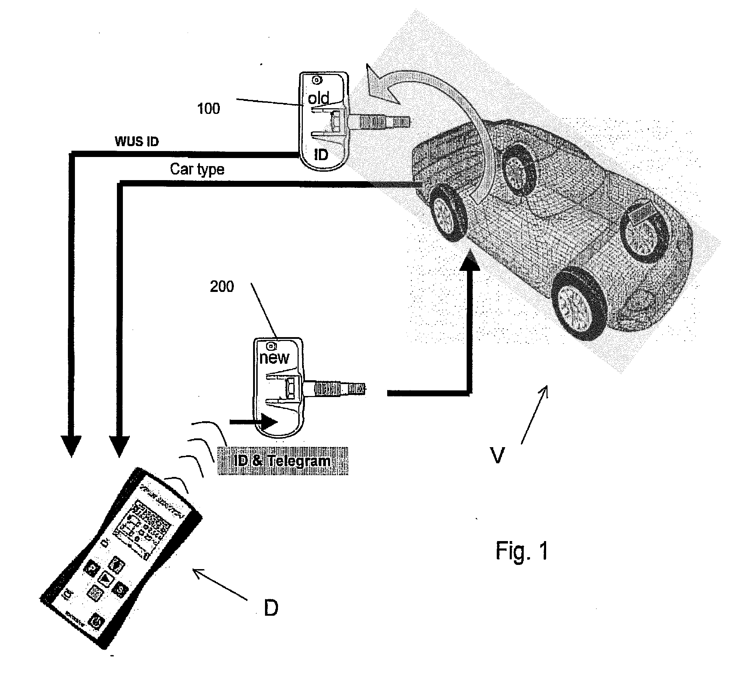

Tel qu'illustré sur le dessin de la figure 1, le procédé de l'invention est mis en oeuvre par le dispositif D illustré qui est constitué par un outil de type boîtier portable électronique basse fréquence qui assure la lecture du numéro d'identifiant du capteur défectueux 100 d'une roue du véhicule V, le met en mémoire et assure son transfert dans la mémoire d'un nouveau capteur 200.

Le boîtier portable électronique D peut assurer l'interrogation du capteur défectueux par transmission en basse fréquence ou bien (notamment dans le cas où le capteur défectueux n'est plus interrogeable) l'opérateur peut lire le numéro d'identifiant sur le boîtier du capteur 100. Une autre opération réalisée par l'opérateur concerne la reconnaissance du véhicule qui permet de déterminer le protocole de communication qu'il exploite.

Ainsi lorsque le dispositif D communique par basse fréquence au capteur 200 qui, conformément à l'invention, est vierge de tout numéro d'identifiant ou de protocole, l'ancien numéro d'identifiant ainsi que le protocole exploité sont chargé dans ledit capteur. Pour ce faire, le capteur 200 est remarquable en ce qu'il présente une mémoire de stockage d'identifiant vide ou réinscriptible.

Selon une autre caractéristique, une information est liée à l'emplacement de la roue dans laquelle était positionné le capteur défectueux 100 et dans laquelle va être positionné le nouveau capteur 200.

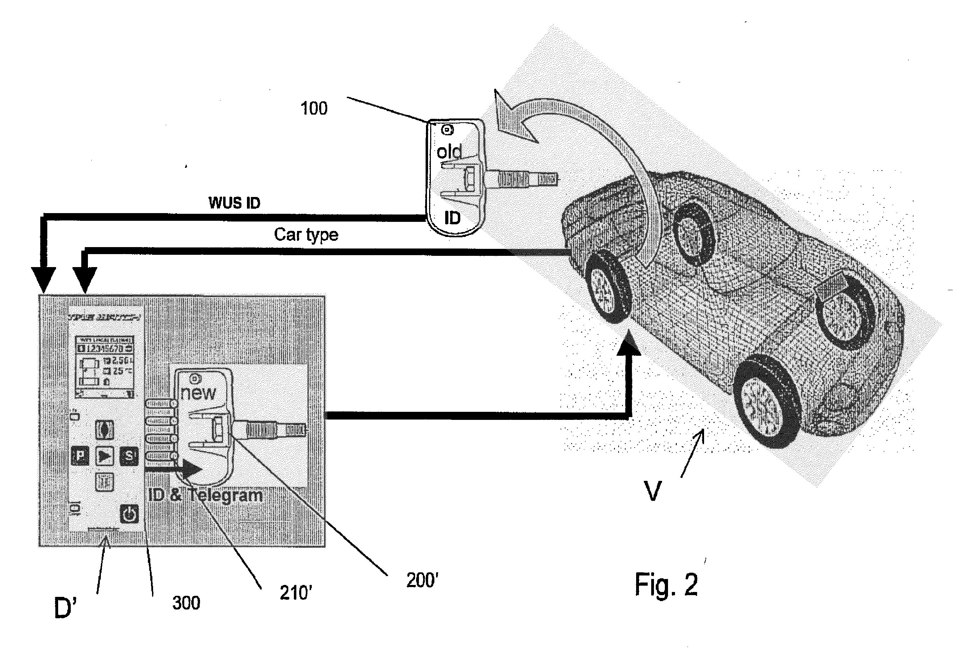

Le procédé illustré par le dessin de la figure 2 diffère du premier en ce que le dispositif D' permettant de le mettre en oeuvre est constitué par un outil de type boîtier électronique équipé d'une platine d'accueil 300 et de communication des capteurs à des fins de lecture d'information et/ou de transmission d'information par contact pour assurer la lecture du numéro du capteur défectueux 100, le mettre en mémoire et assurer son transfert dans la mémoire d'un nouveau capteur 200'. La transmission est réalisée par contacts secs sans utilisation de radio fréquence. Une telle caractéristique permet au dispositif D' de venir alimenter le capteur défectueux afin de permettre la lecture des informations qu'il contient. Pour ce faire, le capteur 200' est équipé d'une interface 210' en liaison avec les sous-ensembles accueillis par le boîtier du capteur 200' et avec laquelle coopère la platine d'accueil 300 du boîtier électronique D'.

Que ce soit par radio fréquence ou par contact direct, l'outil de type boîtier portable électronique D ou D' assure la configuration du capteur vierge afin qu'il adopte le protocole de communication exploité par le capteur défectueux.

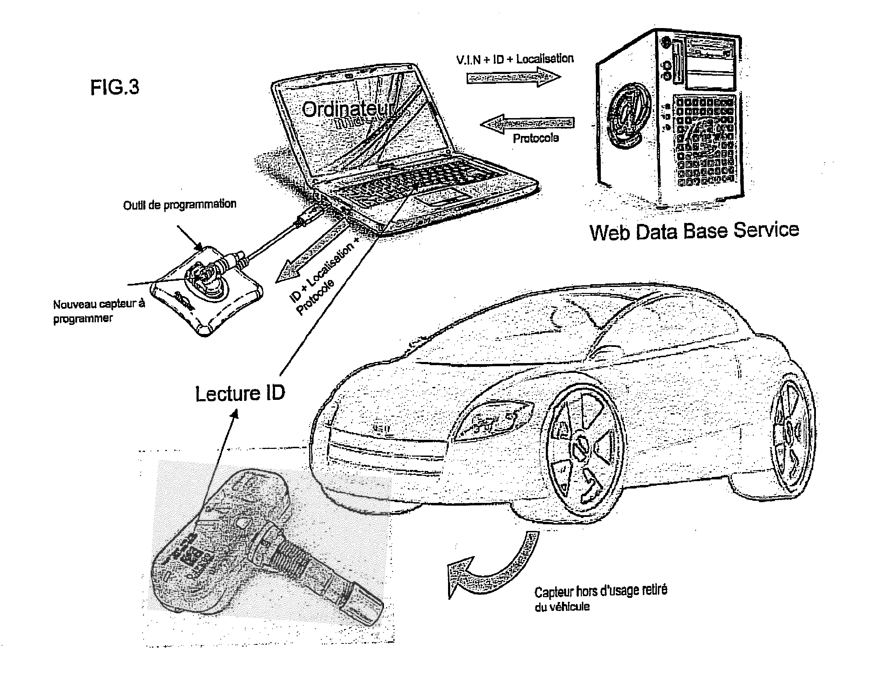

Un exemple de la succession d'opérations est illustré par la figure 3. Sur la base du mode de réalisation illustré par cette figure, les différentes étapes du procédé de l'invention se succèdent de la façon suivante :
- étape 1
   le numéro d'identification du véhicule est relevé et à défaut, la marque, le modèle et l'année,
- étape 2
   l'identifiant du capteur à remplacer est lu, la position de ce dernier (avant gauche, avant droit, etc...) est également repérée,
- étape 3
   l'on pose sur un dispositif de programmation, un capteur entièrement vierge de tout protocole, avec une zone mémoire vierge pour recevoir un identifiant,
- étape 4
   le dispositif de programmation est connecté par une technologie de type USB à une base de donnée, un serveur dédié au moyen d'un ordinateur (PC)
- étape 5
   les données relevées (VIN, localisation, identifiant) sont saisies, et la base de données associée à l'exécutable résidant dans le PC vont lancer au moyen du module de programmation, la programmation du capteur par différents procédés, parmi lesquels :Bluetooth V4.0 ou Zigbee ou transmission par le capteur de pression associé au micro processeur du boîtier contenant le capteur via un delta pression piloté, ou aussi en basse fréquence 125 KHz. Durant cette programmation le bon et unique protocole ainsi que l'identifiant lu sur le capteur à remplacer sont injectés dans le nouveau capteur.
- étape 6
   Le capteur répond en radiofréquences (315 MHz ; 434 MHz, 868 MHz, voire Zigbee, Bluetooth V 4.0) et valide toute la transmission et son bon apprentissage. Cette validation constitue un test final déclenchant le montage et évitant le démontage en cas d'avarie.
- étape 7
   Le technicien monte le capteur de remplacement en lieu et place de l'ancien.

## Revendications

1. Procédé de remplacement d'un capteur défectueux (100) d'un système de surveillance notamment de la pression des roues d'un véhicule (V) du type de celui comprenant :
- des capteurs sans fil (100) disposés dans chaque roue et un récepteur,
- un numéro d'identifiant unique étant affecté à chaque capteur (100) permettant ainsi au récepteur d'identifier le signal,
**CARACTÉRISÉ EN CE QU'**il consiste à :
- retirer le capteur défectueux (100),
- identifier et à relever le numéro d'identifiant unique du capteur défectueux (100),
- identifier et à relever le protocole de communication utilisé sur le véhicule et affecté au capteur défectueux (100),
- affecter ledit numéro d'identifiant unique à un nouveau capteur vierge (200, 200') sans protocole de communication ni numéro d'identifiant affectés et simultanément,
- affecter dans la mémoire du capteur (200, 200') en même temps que l'identifiant unique, une information permettant de localiser la roue dans laquelle est placé le capteur,
- programmer le nouveau capteur (200, 200') afin qu'il exploite ledit protocole de communication exploité par le capteur défectueux (100).

2. Procédé selon la revendication 1, **CARACTÉRISÉ EN CE QUE** la lecture du numéro d'identifiant unique du capteur défectueux (100) est réalisé par un outil de type boîtier portable électronique (D).

3. Procédé selon la revendication 1, **CARACTÉRISÉ EN CE QU'**il consiste à éditer une étiquette comportant ledit numéro d'identifiant unique.

4. Procédé selon la revendication 1, **CARACTÉRISÉ EN CE QUE** la lecture du numéro d'identifiant unique du capteur défectueux (100) est réalisé visuellement sur le capteur défectueux (100).

5. Dispositif permettant de mettre en oeuvre le procédé selon la revendication 1, **CARACTÉRISÉ PAR LE FAIT QU'**il est constitué par un outil de type boîtier portable électronique basse fréquence (D) qui assure la lecture du numéro du capteur défectueux (100), le met en mémoire et assure son transfert dans la mémoire d'un nouveau capteur (200) vierge sans protocole de communication ni numéro d'identifiant affectés.

6. Dispositif permettant de mettre en oeuvre le procédé selon la revendication 1, **CARACTÉRISÉ PAR LE FAIT QU'**il est constitué par un outil de type boîtier électronique (D') équipé d'une platine d'accueil (300) et de communication des capteurs à des fins de lecture d'information et/ou de transmission d'information par contact pour assurer la lecture du numéro du capteur défectueux (100), le mettre en mémoire et assurer son transfert dans la mémoire d'un nouveau capteur (200') vierge sans protocole de communication ni numéro d'identifiant affectés.

7. Dispositif permettant de mettre en oeuvre le procédé selon la revendication 1, **CARACTÉRISÉ PAR LE FAIT QU'**il est constitué par un outil de type boîtier portable électronique basse fréquence (D) qui assure la programmation du capteur (200) vierge sans protocole de communication ni numéro d'identifiant affectés afin qu'il adopte le protocole de communication exploité par le capteur défectueux (100).

8. Capteur adapté au dispositif selon la revendication 6, **CARACTÉRISÉ PAR LE FAIT QU'**il est préformé d'une interface (210') en liaison avec les sous-ensembles accueillis par le boîtier du capteur (200') vierge sans protocole de communication ni numéro d'identifiant affectés et avec laquelle coopère la platine d'accueil (300) du boîtier électronique (D').

9. Procédé selon la revendication 1, **CARACTÉRISÉ EN CE QU'**il consiste à mettre en mémoire dans une base de données l'opération de maintenance réalisée pour traçabilité.

10. Procédé selon la revendication 1, **CARACTÉRISÉ EN CE QU'**il consiste à interroger le nouveau capteur après programmation, lequel capteur répond pour validation de son état.

## Patentansprüche

1. Verfahren zum Austausch eines fehlerhaften Sensors (100) eines Systems zur Überwachung insbesondere des Drucks von Rädern eines Fahrzeugs (V) vom Typ desjenigen, das Folgendes umfasst:
- drahtlose Sensoren (100), die in jedem Rad angeordnet sind, und einen Empfänger,
- eine einmalige Identifizierungsnummer, die jedem Sensor (100) zugeordnet ist, wodurch dem Empfänger ermöglicht wird, das Signal zu identifizieren,
**dadurch gekennzeichnet, dass** es Folgendes umfasst:
- Entfernen des fehlerhaften Sensors (100),
- Identifizieren und Ablesen der einmaligen Identifizierungsnummer des fehlerhaften Sensors (100),
- Identifizieren und Ablesen des Kommunikationsprotokolls, das auf dem Fahrzeug verwendet wird und dem fehlerhaften Sensor (100) zugeordnet ist,
- Zuordnen der einmaligen Identifizierungsnummer zu einem neuen Leer-Sensor (200, 200') ohne zugeordnetes Kommunikationsprotokoll und zugeordnete Identifizierungsnummer und gleichzeitig
- Zuordnen im Speicher des Sensors (200, 200') zur gleichen Zeit wie die einmalige Identifizierung eine Information, die ermöglicht, das Rad zu identifizieren, in dem der Sensor angeordnet ist,
- Programmieren des neuen Sensors (200, 200'), damit er das Kommunikationsprotokoll nutzt, das vom fehlerhaften Sensor (100) genutzt wurde.

2. Verfahren nach Anspruch 1, **dadurch gekennzeichnet, dass** die Ablesung der einmaligen Identifizierungsnummer des fehlerhaften Sensors (100), durch ein Werkzeug vom Typ elektronisches tragbares Gehäuse (D) durchgeführt wird.

3. Verfahren nach Anspruch 1, **dadurch gekennzeichnet, dass** es darin besteht, ein Etikett auszugeben, das die einmalige Identifizierungsnummer trägt.

4. Verfahren nach Anspruch 1, **dadurch gekennzeichnet, dass** die Ablesung der einmaligen Identifizierungsnummer des fehlerhaften Sensors (100), visuell auf dem fehlerhaften Sensor (100) durchgeführt wird.

5. Vorrichtung, die ermöglicht, das Verfahren nach Anspruch 1 durchzuführen, **dadurch gekennzeichnet, dass** es aus einem Werkzeug vom Typ elektronisches tragbares Gehäuse mit Niederfrequenz (D) besteht, das die Ablesung der Nummer des fehlerhaften Sensors (100) sicherstellt, sie im Speicher ablegt und ihre Übertragung in den Speicher eines neuen Leer-Sensors (200) ohne zugeordnetes Kommunikationsprotokoll und zugeordnete Identifizierungsnummer sicherstellt.

6. Vorrichtung, die ermöglicht, das Verfahren nach Anspruch 1 durchzuführen, **dadurch gekennzeichnet, dass** es aus einem Werkzeug vom Typ elektronisches tragbares Gehäuse (D') besteht, ausgestattet mit einer Aufnahme-(300) und Kommunikationsplatine der Sensoren zum Zweck der Ablesung von Information und/oder der Übertragung von Information durch Kontakt, um die Ablesung der Nummer des fehlerhaften Sensors (100) sicherzustellen, sie in den Speicher abzulegen und ihre Übertragung in den Speicher eines neuen Leer-Sensors (200') ohne zugeordnetes Kommunikationsprotokoll und zugeordnete Identifizierungsnummer sicherzustellen.

7. Vorrichtung, die ermöglicht, das Verfahren nach Anspruch 1 durchzuführen, **dadurch gekennzeichnet, dass** es aus einem Werkzeug vom Typ elektronisches tragbares Gehäuse mit Niederfrequenz (D) besteht, das die Programmierung des Leer-Sensors (200) ohne zugeordnetes Kommunikationsprotokoll und zugeordnete Identifizierungsnummer sicherstellt, damit er das Kommunikationsprotokoll, das vom fehlerhaften Sensor (100) genutzt wurde, übernimmt.

8. Sensor, der an die Vorrichtung nach Anspruch 6 angepasst ist, **dadurch gekennzeichnet, dass** er aus einer Schnittstelle (210') in Verbindung mit den Untereinheiten vorgeformt ist, die vom Gehäuse des Leer-Sensors (200') ohne zugewiesenes Kommunikationsprotokoll und zugewiesene Identifizierungsnummer aufgenommen sind, und mit der die Aufnahmeplatine (300) des elektronischen Gehäuses (D') zusammenarbeitet.

9. Verfahren nach Anspruch 1, **dadurch gekennzeichnet, dass** es darin besteht, den Wartungsbetrieb, der durch Rückverfolgbarkeit durchgeführt wird, in einer Datenbank zu speichern.

10. Verfahren nach Anspruch 1, **dadurch gekennzeichnet, dass** es darin besteht, den neuen Sensor nach der Programmierung abzufragen, wobei der Sensor auf die Validierung seines Zustands reagiert.

## Claims

1. Method of replacing a defective sensor (100) in a monitoring system, in particular for the pressure on the wheels of a vehicle (V), of the type comprising:
- wireless sensors (100) placed in each wheel and a receiver,
- a unique identifying number being allocated to each sensor (100) thus enabling the receiver to identify the signal,
**characterized in that** it consists of:
- removing the defective sensor (100),
- identifying and recording the unique identifying number of the defecting sensor (100),
- identifying and recording the communication protocol used on the vehicle and allocated to the defecting sensor (100),
- allocating said unique identifying number to a new blank sensor (200, 200') without a communication protocol or identifying number allocated, and simultaneously,
- allocating in the memory of the sensor (200, 200') at the same time as the unique identifier, information for locating the wheel in which the sensor is placed,
- programming the new sensor (200, 200') so that it uses said communication protocol used by the defective sensor (100).

2. Method according to claim 1, **characterized in that** the unique identifying number of the defective sensor (100) is read by a tool of the portable electronic box (D) type.

3. Method according to claim 1, **characterized in that** it consists of editing a label comprising said unique identifying number.

4. Method according to claim 1, **characterized in that** the unique identifying number of the defective sensor (100) is read visually on the defective sensor (100).

5. Device for implementing the method according to claim 1, **characterized by** the fact that it consists of a tool of the low-frequency portable electronic box (D) type that reads the number of the defective sensor (100), stores it in memory and transfers it into the memory of a new blank sensor (200) without a communication protocol or identifying number allocated.

6. Device for implementing the method according to claim 1, **characterized by** the fact that it consists of a tool of the electronic box (D') type equipped with a sensor accommodation and communication plate (300) for purposes of reading information and/or transmitting information by contact in order to read the number of the defective sensor (100), store it in memory and transfer it into the memory of a new blank sensor (200') without a communication protocol or identifying number allocated.

7. Device for implementing the method according to claim 1, **characterized by** the fact that it consists of a tool of the low-frequency portable electronic box (D) type that programs the blank sensor (200) without a communication protocol or identifying number allocated so that it adopts the communication protocol used by the defective sensor (100).

8. Sensor adapted to the device according to claim 6, **characterized by** the fact that it is preformed with an interface (210') connected with the subassemblies accommodated by the housing of the blank sensor (200') without a communication protocol or identifying number allocated and with which the accommodation plate (300) of the electronic box (D') cooperates.

9. Method according to claim 1, **characterized in that** it consists of storing in memory in a database the maintenance operation performed for traceability.

10. Method according to claim 1, **characterized in that** it consists of interrogating the new sensor after programming, said sensor responding for validation of the state thereof.
